# EUROPÄISCHE PATENTANMELDUNG

(11) **EP 0 555 550 A1**
(43) Veröffentlichungstag der Anmeldung: **18.08.1993**
(21) Anmeldenummer: 92121674.3
(22) Anmeldetag: 19.12.1992
(51) Int. Cl.: F16L 3/22, F16L 3/13

(54) **Rohrschnappschelle für Elektroinstallationsrohre**

(30) Priorität: 14.02.1992 DE 9201892 U
(71) Anmelder: Hermann Kleinhuis GmbH. & Co. KG, D-58507 Lüdenscheid (DE)
(72) Erfinder: Böing, Manfred, W-5880 Lüdenscheid (DE); Henniger, Dieter, W-5885 Schalksmühle (DE)
(74) Vertreter: Hassler, Werner, Dr.

(57) **Zusammenfassung**

Eine Rohrschnappschelle für Elektroinstallationsrohre aus einem Rücken und zwei etwa rechtwinklig anschließenden Schenkeln mit einem Kreisbogen als Innenprofil. Das technische Problem ist eine solche Ausbildung einer Rohrschnappschelle, daß ein leichtes Eindrücken und ein erschwertes Lösen des Elektroinstallationsrohres gegeben ist. Der Kreisbogenabschnitt des einen Schenkels (2) erstreckt sich über einen größeren Umfangswinkel als der des anderen Schenkels (3).

## Beschreibung

Die Erfindung betrifft eine Rohrschnappschelle für Elektroinstallationsrohre aus einem Rücken und zwei etwa rechtwinklig anschließenden Schenkeln mit einem Kreisbogen als Innenprofil.

Bei einer bekannten Rohrschnappschelle dieser Art wird das Elektroinstallationsrohr etwa senkrecht zur Fläche des Rückens in die Öffnung zwischen den Schenkeln eingedrückt. Beide Schenkel müssen beim Eindrücken des Elektroinstallationsrohres verformt werden. Das Elektroinstallationsrohr kann sich in umgekehrter Richtung senkrecht zur Fläche des Rückens wieder leicht ausheben.

Aufgabe der Erfindung ist eine solche Ausbildung einer Rohrschnappschelle, daß ein leichtes Eindrücken und ein erschwertes Lösen des Elektroinstallationsrohres gegeben ist.

Diese Aufgabe wird nach der Erfindung dadurch gelöst, daß der Kreisbogenabschnitt des einen Schenkels sich über einen größeren Umfangswinkel als der des anderen Schenkels erstreckt.

Die Erfindung unterscheidet sich insofern vom Stand der Technik, als das Elektroinstallationsrohr in geneigter Richtung zur Fläche des Rückens eingedrückt wird. Dabei ist die Verformung nur eines Schenkels notwendig. Belastungen in Löserichtung wirken im wesentlichen senkrecht zur Fläche des Rückens, so daß das Elektroinstallationsrohr durch den großen Umschlingungsbogen des einen Schenkels sicher festgehalten wird.

Ein günstiges Eindrücken des Elektroinstallationsrohres wird dadurch erzielt, daß die durch die Schenkel begrenzte Öffnung geneigt zur Fläche des Rückens verläuft. Beim Eindrücken des Elektroinstallationsrohres wird der kürzere Schenkel im wesentlichen nicht verformt. Die Verformung erfolgt an dem längeren Schenkel mit dem größeren Umschlingungsbogen. Hierzu ist aus geometrischen Gründen nur eine vergleichsweise geringe Kraft erforderlich. Eine Lösekraft wirkt im wesentlichen senkrecht zur Fläche des Rückens. Dieser Kraft setzt der Schenkel mit dem großen Umschlingungsbogen einen großen Widerstand entgegen. Die unsymmetrische Anordnung der Schenkel bewirkt also eine Erhöhung der Haltekraft für das Elektroinstallationsrohr.

Eine leichtes Eindrücken wird dadurch sichergestellt, daß an den kürzeren Kreisbogenabschnitt eine Schrägfläche anschließt.

Eine Aneinanderreihung der Rohrschnappschellen erfolgt durch paarig ineinandergreifende Profile. Eine stabile Profilausbildung und ein raumsparender Aufbau werden dadurch erzielt, daß die aneinanderstoßenden Flächen der Schenkel einerseits ein Nasenprofil und andererseits eine Profilrinne mit über die genannte Fläche vorstehenden Stegen. Das Nasenprofil steht somit nur über die halbe Eingriffstiefe über die Seitenfläche der Rohrschnappschelle vor

Eine verbesserte Führung erhält man dadurch, daß zur Aufnahme der Stege Führungsrinnen vorgesehen sind.

Ein Ausführungsbeispiel der Erfindung wird unter Bezugnahme auf die perspektivische Zeichnung einer Rohrschnappschelle erläutert.

Die Rohrschnappschelle ist im wesentlichen U-förmig ausgebildet und umfaßt einen Rücken 1 und zwei etwa rechtwinklig abstehende Schenkel 2 und 3, die einen Kreisbogen 4 als Innenprofil aufweisen. Der Rücken 1 weist einen Durchgang 5 für ein Befestigungselement auf. An den Außenseiten der Schenkel 2 und 3 sind Verbindungsprofile angeformt. Einerseits ist an einer Seitenfläche ein Nasenprofil 6 mit beidseitigen Führungsrinnen 10 vorgesehen. Andererseits ist eine Profilrinne 7 mit seitlichen Stegen 9 vorhanden. Die Verbindungsprofile greifen paarig ineinander. Durch die beschriebene Ausbildung steht das Nasenprofil nur um die halbe Eingriffstiefe aus der Seitenfläche vor. Dadurch erhält man eine sehr stabile Profilausbildung. Außerdem ist der Überstand der Verbindungsprofile verringert.

An dem Schenkel 2 ist ein größerer Kreisbogenabschnitt und damit Umschlingungsbogen vorgesehen. Andererseits ist an dem Schenkel 3 der Kreisbogenabschnitt und Umschlingungsbogen kleiner. Dadurch ist die Fläche der Öffnung zwischen den Kreisbogenabschnitten gegenüber der Fläche des Rückens 1 geneigt. An den Kreisbogenabschnitt des Schenkels 3 schließt eine Schrägfläche 8 an.

Die Schrägfläche 8 führt das Elektroinstallationsrohr beim Eindrücken geneigt zur Fläche des Rückens 1. Dadurch wird das Elektroinstallationsrohr zwangsläufig in den Kreisbogenabschnitt des Schenkels 2 eingeschoben. Im wesentlichen erfolgt nur eine geringfügige Verformung dieses Schenkels 2.

Eine Lösekraft auf das Elektroinstallationsrohr wirkt im wesentlichen senkrecht zur Fläche des Rückens 1. Die große Umschlingung durch den Schenkel 2 setzt dieser Lösekraft einen großen Widerstand entgegen, so daß das Elektroinstallationsrohr gesichert ist.

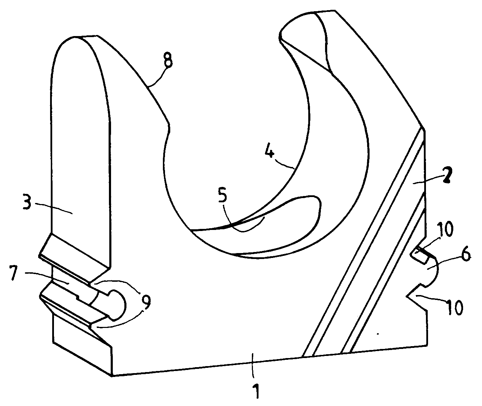

## Patentansprüche

1. Rohrschnappschelle für Elektroinstallationsrohre aus einem Rücken und zwei etwa rechtwinklig anschließenden Schenkeln mit einem Kreisbogen als Innenprofil, dadurch gekennzeichnet, daß der Kreisbogenabschnitt des einen Schenkels (2) sich über einen größeren Umfangswinkel als der des anderen Schenkels (3) erstreckt.

2. Rohrschnappschelle nach Anspruch 1, dadurch gekennzeichnet, daß die durch die Schenkel (2, 3) begrenzte Öffnung geneigt zur Fläche des Rückens (1) verläuft.

3. Rohrschnappschelle nach Anspruch 1 oder 2, dadurch gekennzeichnet, daß an den kürzeren Kreisbogenabschnitt eine Schrägfläche (8) anschließt.

4. Rohrschnappschelle nach einem der Ansprüche 1 bis 3, dadurch gekennzeichnet, daß die aneinanderstoßenden Flächen der Schenkel (2, 3) einerseits ein Nasenprofil (6) und andererseits eine Profilrinne (7) mit über die genannte Fläche vorstehenden Stegen (9) aufweisen.

5. Rohrschnappschelle nach Anspruch 4, dadurch gekennzeichnet, daß zur Aufnahme der Stege (9) Führungsrinnen (10) vorgesehen sind.
